# FASCICULE DE BREVET EUROPEEN

(11) **EP 3 959 394 B1**
(45) Date de publication et mention de la délivrance du brevet: **03.04.2024**
(21) Numéro de dépôt: 20731530.0
(22) Date de dépôt: 24.04.2020
(51) Int. Cl.: E04F 15/20, E04F 15/18

(54) **SYSTÈME STRATIFIÉ ÉTANCHE D'ISOLATION ACOUSTIQUE**
ABGEDICHTETES SCHALLISOLIERENDES LAMINATSYSTEM
SEALED ACOUSTIC-INSULATION LAMINATE SYSTEM

(30) Priorité: 26.04.2019 FR 1904483
(43) Date de publication de la demande: 02.03.2022
(73) Titulaire: Bostik SA, 92700 Colombes (FR)
(72) Inventeur: BECQUET, Jérémy, 77110 Coubert (FR); MAYER, André, 77110 Coubert (FR)
(74) Mandataire: Bandpay & Greuter
(86) Numéro de dépôt international: PCT/FR2020/050711
(87) Numéro de publication internationale: WO 2020/217035

(56) Documents cités:
- CN-A- 108 149 824
- DE-A1-102013 018 198
- DE-U1- 29 805 940

## Description

### Domaine technique

La présente invention a trait au domaine de l'isolation acoustique des bâtiments, notamment au niveau des sols. La présente invention concerne un système stratifié étanche d'isolation acoustique, notamment pour revêtement de sol, et un kit le comprenant. Ce système confère une isolation acoustique, notamment aux bruits d'impact, conforme aux réglementations en vigueur, ainsi qu'une résistance à la pression et une déformabilité satisfaisantes.

### Arrière-plan technique

Afin d'améliorer le confort des occupants et de diminuer les nuisances sonores, des normes réglementaires relatives à l'insonorisation - ou isolation acoustique ou phonique - des bâtiments existent. L'isolation acoustique permet notamment de réduire, voire de supprimer, les bruits environnementaux tels que ceux liés à la circulation automobile, ainsi que de réduire, voire de supprimer, la transmission des bruits à travers le sol. Ces normes concernent tant la construction de bâtiments neufs que la réhabilitation de bâtiments existants. Par exemple, la première réglementation française relative à l'acoustique des bâtiments neufs date de 1969. Cette réglementation a été modifiée par la suite par l'arrêté du 28 octobre 1994, puis par l'arrêté du 30 juin 1999. Les normes françaises actuellement en vigueur sont les normes NF EN ISO 12354-1, 12354-2 et 12354-3.

La réduction de la transmission des bruits à travers le sol, notamment les bruits d'impact tels que les bruits de pas et la chute d'objets, est particulièrement importante dans les immeubles de logements privatifs, notamment dans les pièces ayant des revêtements de sol n'absorbant pas ou peu les bruits tels que le carrelage. A l'heure actuelle, la réglementation recommande la pose de systèmes d'isolation acoustique sous les revêtements en carrelage permettant d'obtenir une performance acoustique satisfaisante, par exemple une réduction d'au moins 18 dB.

Divers systèmes d'isolation acoustique pour revêtement de sols sont connus.

La demande FR 3048712 A1 concerne un système étanche d'isolation acoustique sous forme de plaques destiné à être positionné sur un support et directement sous carrelage. Ce système est constitué d'une plaque isolante composée d'une ou plusieurs couches solidaires les unes des autres et couplée à une partie étanche.

La demande WO 2010/105857 A1 concerne un mat isolant pour l'étanchéification, la séparation et pour l'isolation des bruits de pas, lequel est imperméable à l'eau. Ce mat comprend plusieurs couches dans l'ordre suivant : une couche de tissu ou de non-tissé ; une première couche de film plastique ; une seconde couche de film plastique comprenant une surface de base plane d'un seul tenant et des caractéristiques embouties d'un côté, ainsi que des cavités ; et une couche de tissu ou de non-tissé. La surface de base plane d'un seul tenant de la seconde couche de film plastique est reliée avec la première couche de film plastique. Les caractéristiques sont remplies avec une charge, la charge étant constituée préférentiellement de sable quartzeux et d'un liant.

La demande EP 2812512 A2 concerne un matelas d'isolation comprenant une couche continue en matière plastique présentant des coupelles ouvertes d'un côté et une couche de recouvrement placée sur la couche en matière plastique. Les coupelles peuvent être remplies avec un matériau dur absorbant tel que par exemple de l'argile expansé.

Bien que les systèmes connus renforcent l'isolation acoustique des sols les comprenant, ces systèmes ne permettent pas nécessairement d'atteindre des performances d'isolation acoustique pleinement satisfaisantes. La fourniture de systèmes ayant une performance améliorée est recherchée. Cependant, une bonne performance acoustique ne doit pas être obtenue au détriment des autres propriétés souhaitables de ceux-ci, comme par exemple la flexibilité et la déformabilité, la maniabilité, la durabilité, la facilité de conditionnement, le poids, l'épaisseur, les coûts de fabrication, la résistance à la pression et la charge supportée, etc.

Il existe donc un réel besoin de fournir un système pour l'isolation acoustique des sols, permettant une bonne réduction de la transmission des bruits et notamment des bruits d'impact (par exemple d'au moins 18 dB, préférentiellement d'au moins 19 dB, très préférentiellement d'au moins 20 dB). Il existe également un besoin de fournir un système ayant une flexibilité et une déformabilité facilitant son utilisation, notamment comme intermédiaire entre le support, notamment une chape de béton, et un revêtement du sol, notamment du carrelage. Il existe également un besoin de fournir un système qui soit maniable et qui peut être stocké sous une forme facilitant son stockage et sa livraison. Enfin, il existe également un besoin de fournir un système dont les coûts de production sont raisonnables, sans diminuer pour autant sa durabilité.

### Résumé de l'invention

L'invention concerne en premier lieu un système stratifié étanche d'isolation acoustique pour revêtement de sol comprenant une première couche externe, une seconde couche externe, et une couche intermédiaire étanche interposée entre les deux couches externes ; ladite couche intermédiaire étant une couche plastique préformée présentant une série de cavités sur l'une de ses deux surfaces ; lesdites cavités comprenant un matériau de remplissage résilient ayant une dureté Shore A de 50 à 90.

Dans des modes de réalisation, le matériau résilient est choisi parmi le groupe consistant en le caoutchouc, le liège, et leurs mélanges. En particulier, le matériau résilient est sous forme de billes de caoutchouc ayant une granulométrie médiane en poids (d50) de 0,1 à 2 mm.

Dans des modes de réalisation, les cavités comprennent en outre un matériau liant.

Dans des modes de réalisation, le système stratifié étanche d'isolation acoustique comprend en outre une couche adhésive obtenue par application d'une composition adhésive sur l'une des couches externes et/ou sur le support.

Dans des modes de réalisation, la composition adhésive comprend des charges ayant une densité inférieure à 1,2 g/cm³. En particulier, les charges ayant une densité inférieure à 1,2 g/cm³ sont des billes de verre expansées.

Dans des modes de réalisation, la couche intermédiaire étanche est obtenue à partir d'une couche plane mise en forme par un procédé de formage ; préférentiellement par un procédé de thermoformage.

Dans des modes de réalisation, la couche intermédiaire étanche comprend un matériau plastique choisi parmi le groupe consistant en les polyoléfines, le polyuréthane, le polychlorure de vinyle, le copolymère éthylène/acétate de vinyle, le terpolymère éthylène-propylène-diène ou leurs mélanges ; préférentiellement parmi le groupe consistant en le polyéthylène, le polypropylène, ou leurs mélanges.

Dans des modes de réalisation, la couche intermédiaire étanche a une épaisseur de 1 mm à 9 mm ; préférentiellement de 2 mm à 7 mm ; très préférentiellement de 3 mm à 6 mm.

Dans des modes de réalisation, les couches externes ont chacune une épaisseur de 5 µm à 5 mm ; préférentiellement de 10 µm à 3 mm ; très préférentiellement de 50 µm à 2 mm.

Dans des modes de réalisation, les couches externes sont solidaires de la couche intermédiaire étanche, préférentiellement les couches externes sont thermosoudées sur la couche intermédiaire étanche

L'invention concerne en outre un kit d'isolation acoustique comprenant un système stratifié étanche, tel que défini ci-contre, comprenant une première couche externe, une seconde couche externe et une couche intermédiaire étanche interposée entre les deux couches externes ; ladite couche intermédiaire étant une couche plastique préformée présentant une série de cavités sur l'une de ses deux surfaces ; lesdites cavités comprenant un matériau de remplissage résilient ayant une dureté Shore A de 50 à 90 ; et une composition adhésive.

L'invention concerne en outre un procédé de pose d'un système stratifié étanche d'isolation acoustique, comprenant les étapes suivantes : la fourniture d'un système stratifié étanche, tel que défini ci-contre, comprenant une première couche externe, une seconde couche externe et une couche intermédiaire étanche interposée entre la première couche externe et la seconde couche externe ; ladite couche intermédiaire étant une couche plastique préformée présentant une série de cavités sur l'une de ses surfaces ; lesdites cavités comprenant un matériau résilient ayant une dureté Shore A de 50 à 90 ; la détermination de l'orientation du système stratifié étanche ; l'application d'une composition adhésive sur la couche externe inférieure à positionner en vis-à-vis du support ou directement sur le support ; la pose du système stratifié étanche sur le support et l'adhésion de la couche externe inférieure au support ; l'application d'un mortier-colle sur la couche externe supérieure ; et la pose du revêtement de sol et l'adhésion à la couche externe supérieure.

La présente invention permet de surmonter les inconvénients de l'état de la technique. Elle fournit plus particulièrement un système d'isolation acoustique pour revêtement de sols ayant une performance acoustique satisfaisante, et permettant notamment d'obtenir une réduction de la transmission des bruits d'au moins 18 dB.

De plus, le système de l'invention présente également un ou de préférence plusieurs avantages, notamment une épaisseur réduite, une imperméabilité, une flexibilité et une déformabilité satisfaisantes et donc une grande maniabilité tant au niveau du stockage, de la livraison que de la pose.

### Brève description des figures

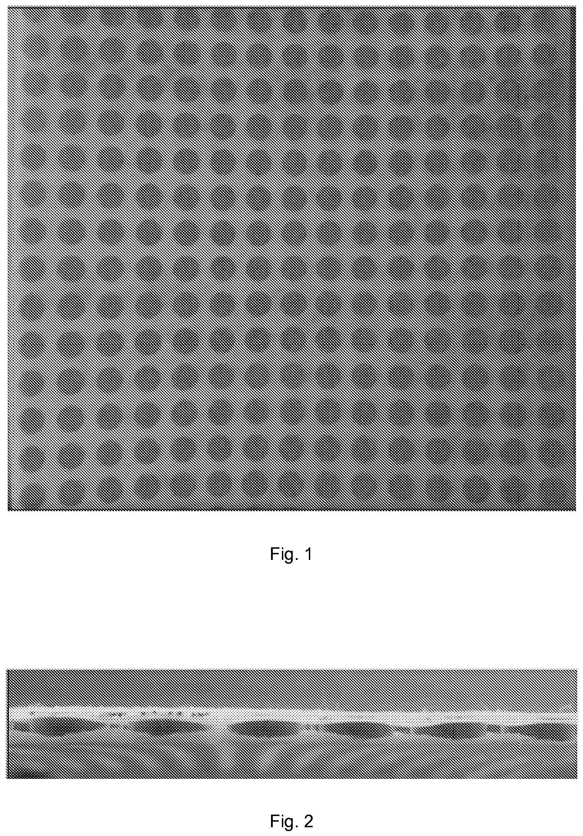

La figure 1 représente une photographie de la surface de la première couche externe du système stratifié étanche.
La figure représente une photographie de la tranche (en coupe) du système stratifié étanche.

### Description détaillée

L'invention est maintenant décrite plus en détail et de façon non limitative dans la description qui suit.

### Système stratifié étanche

Dans un premier aspect, la présente invention concerne un système stratifié étanche d'isolation acoustique pour revêtement de sols. La performance acoustique de ce système est conforme aux normes réglementaires en vigueur, et permet de réduire notablement la transmission des bruits, notamment lorsqu'il est interposé entre le support et le revêtement du sol, de préférence d'au moins 18 dB, préférentiellement d'au moins 19 dB, très préférentiellement d'au moins 20 dB. Ce système stratifié étanche peut être utilisé avec tout type de revêtement de sol, y inclus le carrelage, le parquet, les sols souples (par exemple en PVC).

Dans le domaine de la construction, un système d'isolation acoustique peut également être désigné par différents termes comme par exemple « panneau », « matelas » ou « sous-couche » d'isolation acoustique.

Le système selon la présente invention est un système multicouche comprenant une première couche externe, une seconde couche externe, et une couche interposée entre ces deux couches externes.

### La couche intermédiaire étanche

Le système selon la présente invention comprend une couche intermédiaire étanche, interposée entre les deux couches externes.

Cette couche est une couche préformée. Cette couche préformée est typiquement obtenue à partir d'une couche plane mise en forme par un procédé de formage adapté, préférentiellement un procédé de thermoformage. Pour illustration, une couche préformée par thermoformage peut être obtenue par la fourniture d'une couche plane et son chauffage, afin de ramollir la matière la composant, puis par la pose sur un moule et aspiration afin de permettre la déformation de la matière, afin d'épouser la forme du moule. Cette couche n'est donc pas perforée. Cette couche est donc dépourvue de perforations.

Cette couche est une couche plastique. Cette couche comprend donc un matériau plastique ; préférentiellement un matériau plastique choisi parmi le groupe consistant en les polyoléfines, le polyuréthane, le polychlorure de vinyle, le copolymère éthylène/acétate de vinyle, le terpolymère éthylène-propylène-diène ou leurs mélanges. Les polyoléfines peuvent être choisies parmi le groupe consistant en le polyéthylène, le polypropylène, ou leurs mélanges. Le polyéthylène et/ou le polypropylène peuvent être des polymères à haute ou faible densité.

Cette couche peut avoir une épaisseur de 1 mm à 9 mm ; préférentiellement de 2 mm à 7 mm ; très préférentiellement de 3 mm à 6 mm.

Cette couche intermédiaire présente deux surfaces, chaque surface étant en contact avec une couche externe respective. Cette couche présente une série (un ensemble) de cavités dont les ouvertures sont situées sur l'une de ses deux surfaces, et donc de préférence une série de projections correspondantes sur l'autre surface. Les cavités peuvent être de nombre et de taille variées, selon les applications envisagées. Ces cavités sont formées lors de la mise en forme de la couche par le procédé de formage. Ces cavités ne forment pas de perforations.

Chaque cavité peut être de toute forme adaptée. Chaque cavité peut être de forme circulaire, ovale, triangulaire, carrée, pentagonale, hexagonale ou de toute autre forme adaptée ; préférentiellement la cavité est de forme circulaire. Dans un mode de réalisation, toutes les cavités sont de même forme, préférentiellement toutes les cavités sont de forme circulaire.

Chaque cavité peut avoir une dimension maximale (orthogonalement à la hauteur de la cavité) de 1 à 50 mm, préférentiellement de 2 à 20 mm, très préférentiellement de 5 à 10 mm. Lorsque la cavité est de forme circulaire, le diamètre est de 1 à 50 mm, préférentiellement de 2 à 20 mm, très préférentiellement de 5 à 10 mm.

Chaque cavité peut avoir une hauteur (ou profondeur, perpendiculairement au plan moyen de la couche intermédiaire) de 1 à 10 mm, préférentiellement de 2 à 8 mm, très préférentiellement de 3 à 7 mm. Dans un mode de réalisation, toutes les cavités ont substantiellement la même hauteur.

Chaque cavité peut définir un volume interne de 3,14 à 2826 mm³, préférentiellement de 50 à 750 mm³, très préférentiellement de 100 à 400 mm³.

Chaque cavité a préférentiellement un fond plat. Dans un mode de réalisation, la couche préformée comprend donc deux surfaces parallèles. La première surface est formée par les sections de la couche située entre les cavités, ce qui lui confère un aspect perforé. La seconde surface est formée par les sections de la couche correspondant au fond des cavités, ce qui lui confère un aspect discontinu.

La série de cavités peut former un motif régulier. Dans un mode de réalisation, les cavités peuvent former un arrangement selon un réseau carré, rectangulaire, carré centré, rectangulaire centré, triangulaire, etc.

L'ensemble des cavités peuvent représenter de 20 à 80 %, préférentiellement de 30 à 70 %, très préférentiellement de 40 à 60 %, de la surface totale de la couche intermédiaire.

Les cavités adjacentes peuvent être espacées, dans leur distance la plus faible, de 0,5 à 10 mm, préférentiellement de 1 à 6 mm, très préférentiellement de 2 à 4 mm.

### Couches externes

Le système selon la présente invention comprend une première couche externe et une seconde couche externe, entre lesquelles est interposée la couche intermédiaire étanche. Les couches externes sont des couches planes. Les couches externes peuvent être identiques ou différentes. Dans un mode de réalisation, aucune couche n'est interposée entre la couche intermédiaire étanche et chacune des couches externes.

Dans un mode de réalisation, les couches externes sont solidaires de la couche intermédiaire étanche, préférentiellement les couches externes sont thermosoudées sur la couche intermédiaire étanche.

Dans un mode de réalisation, la première couche externe est apposée de manière solidaire sur la première surface de la couche intermédiaire formée par les sections situées entre les cavités. La première couche externe scelle donc les cavités.

Dans un mode de réalisation, la seconde couche externe est apposée de manière solidaire sur la seconde surface de la couche intermédiaire formée par les sections de la couche correspondant au fond des cavités.

Tout procédé adapté peut être utilisé, notamment un procédé de thermosoudage.

Chaque couche externe peut-être choisie parmi le groupe consistant en une couche tissée ou une couche non tissée ; préférentiellement la couche externe est une couche non tissée ou alternativement la couche externe est une couche tissée. Les couches externes peuvent comprendre des fibres minérales, des fibres d'origine animale, des fibres végétales, des fibres synthétiques, ou leurs mélanges. Par exemple, les fibres minérales peuvent être des fibres de verres, des fibres d'amiante, ou leurs mélanges ; les fibres d'origine animale peuvent être la soie, la laine, ou leurs mélanges ; les fibres végétales peuvent être le coton, le lin, le chanvre ou leurs mélanges ; les fibres synthétiques peuvent être le polyamide, le polyester (polytéréphtalate d'éthylène, polytéréphtalate de butylène, le chlorure de polyvinyle, le polypropylène, le polyéthylène, etc.) ou leurs mélanges. Dans un mode de réalisation, les deux couches externes sont des couches non tissées.

Chaque couche externe peut avoir une épaisseur de 5 µm à 5 mm, préférentiellement de 10 µm à 3 mm, très préférentiellement de 50 µm à 2 mm.

Chaque couche externe peut comprendre en outre une trame de renfort, préférentiellement une trame de renfort en fibres de verre. Cette trame, à résistance élevée renforce la résistance aux chocs.

### Orientation

L'orientation du système peut varier en fonction de son usage. Par exemple, lorsque que le système selon l'invention est utilisé comme intermédiaire entre le support, notamment la chape de béton, et le revêtement du sol, notamment du carrelage, les ouvertures des cavités de la couche intermédiaire peuvent être orientées vers le bas ou vers le haut.

Dans un mode de réalisation préféré, les ouvertures des cavités peuvent être orientées vers le haut (et le fond des cavités vers le bas). La première couche externe forme alors la couche externe supérieure, sur laquelle le revêtement de sol sera posé, notamment le carrelage. La seconde couche externe forme la couche externe inférieure, laquelle sera posée sur le support, notamment la chape de béton. Cette orientation a l'avantage de limiter le contact avec le support et de minimiser la transmission des vibrations

Dans un mode de réalisation alternatif, les ouvertures des cavités peuvent être orientées vers le bas (et le fond des cavités vers le haut). La seconde couche externe forme alors la couche externe supérieure, sur laquelle le revêtement de sol sera posé, notamment le carrelage. La première couche externe forme la couche externe inférieure, laquelle sera posée sur le support, notamment la chape de béton.

### Matériau résilient

Les cavités comprennent un matériau résilient ou un mélange comprenant un matériau résilient. Par « matériau résilient », on entend un matériau capable d'absorber de l'énergie, suite à sa déformation sous l'effet d'un choc, limitant voire bloquant la transmission des vibrations et donc indirectement celle du bruit. Les cavités étant scellées de façon permanente par la première couche externe, le système renferme donc un matériau résilient.

Le matériau résilient est un matériau ayant une dureté Shore A de 40 à 90, préférentiellement de 45 à 80, très préférentiellement de 50 à 75. Le matériau peut avoir une dureté Shore A d'environ 70. La dureté Shore A correspond à la dureté de matériaux mous. La dureté Shore A peut être mesurée par la norme ISO 7619-1 2010.

Le matériau résilient peut-être choisi parmi le groupe consistant en le caoutchouc, le liège et leurs mélanges ; préférentiellement le matériau résilient est le caoutchouc.

Dans un mode de réalisation, le matériau résilient est sous forme de billes, notamment sous forme des billes de caoutchouc.

Les billes peuvent avoir une granulométrie médiane en poids (d50) de 0,1 à 2 mm ; préférentiellement de 0,2 à 1,5 mm ; très préférentiellement de 0,3 à 0,8 mm ; notamment de 0,3 à 0,4 mm, de 0,4 à 0,5 mm, de 0,5 à 0,6 mm, de 0,6 à 0,7 mm ou de 0,7 à 0,8 mm. L'analyse granulométrique médiane en poids (d50) peut être réalisée par analyse granulométrique laser. Dans un mode de réalisation, les billes ont une granulométrie médiane en poids (d50) d'environ 0,45 mm.

Les billes de caoutchouc peuvent avoir une densité de 0,8 à 1,4 g/l ; préférentiellement de 0,9 à 1,3 g/l ; très préférentiellement de 0,9 à 1,2 g/l.

Le caoutchouc peut être un caoutchouc naturel et/ou un caoutchouc synthétique. Le caoutchouc synthétique peut être choisi parmi le groupe consistant en styrène-butadiène et le terpolymère éthylène-propylène-diène. Le caoutchouc peut être du caoutchouc recyclé, par exemple obtenu notamment à partir de pneus usagés. Le recyclage de pneus usagés à l'avantage de réduire les coûts de production du système selon l'invention, et de réduire la quantité de déchets.

Dans un autre mode de réalisation, le matériau résilient est du liège. Le liège peut être choisi parmi le groupe consistant en le liège brut (aucun traitement hormis l'ébouillantage) ou le liège expansé (par exemple par chauffage à haute température). Un matériau composite comprenant du liège est disponible notamment sous la dénomination commerciale Hexpol^{®} TPE de Lifocork.

Les cavités peuvent comprendre exclusivement (100 %) du matériau résilient. Alternativement, le mélange utilisé pour remplir les cavités peut comprendre au moins 10 %, préférentiellement au moins 50 %, très préférentiellement au moins 80 % de matériau résilient, en poids total du mélange.

Les inventeurs ont démontré que ce matériau a l'avantage de conférer une bonne performance acoustique au système. En outre, du fait de son caractère résilient et contrairement aux matériaux rigides tels que le sable, ce matériau ne rigidifie pas de manière excessive le système. Celui-ci conserve donc une bonne flexibilité et une bonne déformabilité. Ces propriétés facilitent son utilisation, notamment comme intermédiaire entre le support et le revêtement du sol. Ces propriétés rendent également ce système tout particulièrement maniable, en ce qu'il peut être stocké sous forme de rouleau.

### Matériau liant

Les cavités peuvent comprendre en outre un matériau liant, mélangé au matériau résilient. L'ajout d'un matériau liant renforce avantageusement la cohésion du système stratifié étanche. Il permet notamment de lier les matériaux résilients entre eux et d'éviter leur écoulement des cavités lors de la découpe du système stratifié. De préférence, le liant fond lors de la fixation de la première couche externe sur la couche intermédiaire, entraînant le scellement des cavités.

Le matériau liant peut être un matériau thermoplastique ; préférentiellement un polyvinyle acétate (PVA), un polyacrylate, un éthylène-vinyl-acétate, un polyamide, un polyuréthane et leurs mélanges.

Le mélange utilisé pour remplir les cavités peut comprendre de 1 à 90 %, préférentiellement de 2 à 50 %, très préférentiellement de 5 à 20 %, de matériau liant, en poids total du mélange.

### Autres matériaux

Les cavités peuvent comprendre d'autres matériaux, par exemple un retardateur de flamme ou une composition intumescente.

Le retardateur de flamme peut être choisi parmi le groupe consistant en les polybromodiphényléthers (PBDE), les hexabromocyclododécanes (HBCDD), le tétrabromobisphénol A (TBBPA), les polybromobiphényles (PBB) et leurs mélanges.

La composition intumescente peut être choisie parmi les phosphate ou phosphite de mélamine avec du pentaérythritol, et leurs mélanges.

Le mélange utilisé pour remplir les cavités peut comprendre de 0,1 à 20 %, préférentiellement de 0,1 à 10 %, très préférentiellement de 0,1 à 5 %, d'autres matériaux, en poids total du mélange.

### Couche adhésive

Le système selon l'invention peut comprendre en outre au moins une couche adhésive. Cette couche adhésive permet l'adhésion du système au support sur lequel il est posé, notamment une chape de béton.

La composition adhésive peut être appliquée juste avant la pose du système stratifié étanche. Dans un mode de réalisation préféré, la composition adhésive peut être appliquée sur le support sur lequel le système selon l'invention sera posé. Dans des modes de réalisation alternatifs, la couche adhésive peut être formée par application d'une composition adhésive sur la première couche externe et/ou la deuxième couche externe, selon l'orientation du système lors de la pose.

La composition adhésive peut être appliquée lors de la fabrication du système selon l'invention pour former une couche adhésive, laquelle peut être recouverte d'une couche de protection à retirer avant la pose. Le système est alors prêt à l'emploi et prêt à poser, après retrait de la couche de protection. Dans ce mode de réalisation, le système d'isolation acoustique selon l'invention comprend donc une première couche externe supérieure et une seconde couche externe inférieure, une couche intermédiaire étanche interposée entre les deux couches supérieure et inférieure, au moins une couche adhésive recouvrant la couche inférieure, et optionnellement une couche de protection recouvrant la couche adhésive.

La composition adhésive peut être une composition adhésive aqueuse.

La composition adhésive peut être une composition acrylique aqueuse. La composition acrylique peut être une composition prête à l'emploi ou être obtenue par dispersion au préalable d'un matériau adhésif sec dans de l'eau. La composition acrylique peut comprendre un matériau adhésif choisi parmi le groupe consistant en un polymère aqueux acrylique, un polymère styrène-acrylique, un polymère vinyle acétate d'éthyle ou leurs mélanges. La composition adhésive peut comprendre de 10 à 90 %, préférentiellement de 20 à 85 %, très préférentiellement de 30 à 85 %, de matériau adhésif, en poids total de la composition adhésive au moment de l'application. Le matériau adhésif peut être par exemple des polymères disponibles sous la dénomination commerciale Revacryl AE4522 disponible chez Synthomer qui est une dispersion aqueuse spécialement modifiée d'un copolymère d'ester acrylique et de styrène destiné. La dispersion contient notamment un système émulsifiant anionique et est exempte d'aides à la formation de film, de solvants et de plastifiants. Lipaton AE4522 disponible chez SYNTHOMER.

La composition adhésive peut comprendre des polymères silyl modifiés, également dénommés polymères à silane modifié ou polymères comprenant des groupes terminaux silanes ; préférentiellement des polyéthers comprenant des groupes terminaux silanes ; très préférentiellement des polyéthers comprenant des groupes terminaux méthoxysilanes ; par exemple des polyéthers comprenant des groupes terminaux diméthoxysilanes ou triméthoxysilanes. Ces polymères peuvent être réticulés, par exemple par hydrolyse d'éthers silyliques. Ces polymères sont généralement dépourvus d'isocyanate. Ces polymères peuvent être par exemple les polymères disponibles sous la dénomination commerciale MS Polymer^{®} de Kaneka. La composition adhésive peut comprendre de 10 à 85 %, préférentiellement de 15 à 80 %, très préférentiellement de 20 à 50 %, de ces polymères, en poids total de la composition adhésive au moment de l'application. Les compositions adhésives peuvent être par exemple des compositions adhésives disponibles sous la dénomination commerciale SAX 260 ou SAX 303H de Kaneka, Geniosil STPE 10 ou STPE 30 de Wacker. De telles compositions peuvent comprendre en outre un catalyseur de réticulation. Le catalyseur peut être choisi par exemple parmi le groupe consistant en des aminosilanes (par exemple N-(2-aminoéthyl)-3-aminopropyltriméthoxysilane ou le 3-aminopropyltriméthoxysilane), des amines (par exemple 1,8-diazabicyclo[5.4.0]undéc-7-ène ou le 1,5-diazabicyclo[4.3.0]non-5-ène) ou des dérivés organométalliques, notamment des dérivés organiques de fer, d'étain divalent ou tétravalent (par exemple Neostann^{®} S-1 ou Tib-Kat^{®} 324), de titane (par exemple l'acétyl acétonate de titane TYZOR^{®} AA75), d'aluminium (par exemple le chélate d'aluminium K-KAT^{®} 5218 de King Industries). De telles compositions peuvent comprendre en outre un plastifiant. Le plastifiant peut être choisi parmi le groupe consistant en les dérivés de l'acide benzoïque (préférentiellement les benzoates), les dérivés de l'acide phtalique (préférentiellement les phtalates), les dérivés de l'acide trimellitique, les dérivés de l'acide pyromellitique, les dérivés de l'acide adipique (préférentiellement les adipates), les dérivés de l'acide sébacique (préférentiellement les sébaçates), les dérivés de l'acide fumarique, les dérivés de l'acide maléique, les dérivés de l'acide itaconique ou les dérivés de l'acide citrique, ou les dérivés de polyester, les dérivés de polyéther, les dérivés de l'huile minérale d'hydrocarbures. Le plastifiant peut être choisi parmi le groupe consistant en les phtalates, les sébaçates, les adipates, les benzoates phtalates ou leurs mélanges. Les phtalates peuvent être choisis, par exemple, parmi le phtalate de dibutyle, le phtalate de dioctyle, le phtalate de dicyclohexyle, le phtalate de diisooctyle, le phtalate de diisodécyle, le phtalate de dibenzyle, le phtalate de butylbenzyle ou leurs mélanges. De telles compositions peuvent comprendre en outre un absorbeur d'humidité ; préférentiellement un absorbeur d'humidité choisi parmi le groupe consistant en le vinyltriméthoxysilane, le vinyltriéthoxysilane, les alkoxyarylsilanes (par exemple GENIOSILO XL 70 par Wacker), et leurs mélanges. De telles compositions peuvent comprendre en outre un promoteur d'adhérence ; préférentiellement le promoteur d'adhérence est de type aminosilane ; très préférentiellement le promoteur d'adhérence est une aminosilane ; encore plus préférentiellement le promoteur d'adhérence est choisi parmi le groupe consistant en le N-(2-aminoéthyl)-3-aminopropyltriméthoxysilane, le 3-aminopropyltriméthoxysilane, ou leurs mélanges.

A titre d'exemple, l'adhésif peut comprendre de 20 à 60 % de polyoxyalkylènes à terminaisons silane, de 30 à 70% de carbonate de calcium, de 0,5 à 5 % d'agent desséchant, de 0,1 à 5 % de catalyseur de durcissement, de 0,2 à 5 % de promoteur d'adhérence, et optionnellement de 0 à 50 % en tout de pigments colorés, plastifiants, dispersants, autres charges, photostabilisants et stabilisants thermiques, en poids total de l'adhésif au moment de l'application. Les polyoxyalkylènes à terminaisons silane peuvent être composés de deux types de polyoxypropylène à terminaisons méthoxyalkylsilane ayant des groupes alkyle portant jusqu'à 10 atomes de carbone et ayant une viscosité de 5 à 10 Pa·s et 10 à 25 Pa·s, respectivement (mesurée à 20 °C et un gradient de cisaillement de 1 s⁻¹) dans le rapport massique de 5:1 à 1:5. La demande WO 2008/077510 A1 divulgue des adhésifs de ce type.

La composition adhésive peut comprendre également des charges ayant une densité inférieure à 1,2 g/cm³; préférentiellement inférieure à 1,1 g/cm³, très préférentiellement inférieure à 1 g/cm³. Ces charges peuvent également avoir une granulométrie médiane en poids (d50) de 0,2 mm à 4 mm ; très préférentiellement de 0,4 à 2 mm ; préférentiellement de 0,5 à 1 mm ; notamment de 0,5 à 0,6 mm, de 0,6 à 0,7 mm, de 0,7 à 0,8 mm, de 0,8 à 0,9 mm ou de 0,9 à 1 mm. L'adhésif peut comprendre de 1 à 40 %, préférentiellement de 5 à 30 %, très préférentiellement de 10 à 20 %, de ces charges, en poids total de la composition adhésive au moment de l'application. Ces charges peuvent être ajoutées à toute composition adhésive disponible adaptée. Ces charges peuvent également remplacer en tout ou partie du carbonate de calcium de l'adhésif divulgué dans la demande WO 2008/077510 A1. De manière préférée, ces charges sont des billes de verre expansées. Des billes de verre expansées sont disponibles sous la dénomination commerciale Poraver^{®}, qui comprend du verre recyclé d'origine 100% minéral.

Les inventeurs ont démontré que l'ajout de charges ayant une densité inférieure à 1,2 g/cm³, et particulièrement de billes de verre expansées, permettait d'améliorer la performance acoustique du système selon l'invention. Une performance acoustique particulièrement satisfaisante est obtenue avec une composition adhésive comprenant des billes de verre expansées ayant une granulométrie médiane en poids (d50) de 0,2 mm à 4 mm ; très préférentiellement de 0,4 à 2 mm; préférentiellement de 0,5 à 1 mm ; notamment de 0,5 à 0,6 mm, de 0,6 à 0,7 mm, de 0,7 à 0,8 mm, de 0,8 à 0,9 mm ou de 0,9 à 1 mm. L'analyse granulométrique en poids d50 des billes peut être réalisée par analyse granulométrique laser.

### Kit

Dans un deuxième aspect, la présente invention concerne un kit d'isolation acoustique comprenant un système stratifié étanche et une composition adhésive.

Le système stratifié étanche, tel que défini ci-contre, comprend une première couche externe, une seconde couche externe, et une couche intermédiaire étanche interposée entre ces deux couches externes.

La composition adhésive, telle que définie ci-contre, peut être une composition adhésive aqueuse. Elle peut comprendre en outre des charges ayant une densité inférieure à 1,2 g/cm³. Dans un mode de réalisation préféré, les charges ayant une densité inférieure à 1,2 g/cm³ sont incorporées dans la composition adhésive prête à l'emploi. Dans un autre mode de réalisation alternatif, les charges ayant une densité inférieure à 1,2 g/cm³ sont incorporées dans la composition adhésive juste avant application.

Le kit selon la présente invention peut être fourni avec des instructions. Ces instructions peuvent détailler le procédé d'utilisation du système, et notamment l'étape d'application de la composition adhésive sur l'une des deux couches externes ou sur le support, et l'étape de pose du système sur le support.

### Utilisations

La présente invention utilise des charges ayant une densité inférieure à 1,2 g/cm³, par exemple des billes de verre expansées, dans la composition adhésive pour renforcer l'isolation acoustique des sols. En effet, les inventeurs ont démontré que l'incorporation de charges ayant une densité inférieure à 1,2 g/cm³ permettait de renforcer l'isolation acoustique préférentiellement d'au moins 1 dB ; très préférentiellement d'au moins 2 dB, par rapport aux compositions adhésives ne comprenant pas de telles charges.

### Procédé de pose du système stratifié étanche

Le système stratifié étanche selon la présente invention peut être utilisé selon le procédé comprenant les étapes suivantes :
La fourniture d'un système stratifié étanche comprenant une couche intermédiaire étanche interposée entre la première couche externe et la seconde couche externe ;
la détermination de l'orientation du système stratifié étanche avec les cavités orientées vers le haut, la première couche externe supérieure et la seconde couche externe inférieure ; ou alternativement les cavités orientées vers le bas, la seconde couche externe supérieure et la première couche externe inférieure ;
l'application de la composition adhésive sur la couche externe inférieure à positionner en vis-à-vis du support, respectivement la seconde couche externe ou la première couche externe, ou alternativement l'application de la composition adhésive directement sur le support ;
la pose du système stratifié étanche sur le support et l'adhésion de la couche externe inférieure au support ;
l'application d'un mortier-colle sur la couche externe supérieure ; et
la pose du revêtement de sol et l'adhésion à la couche externe supérieure.

### Exemple

Les exemples suivants illustrent l'invention sans la limiter.

### Test de référence

Des tests de réduction des bruits d'impact ont été réalisés selon la norme NBN EN ISO 16251-1 de septembre 2014. Le bruit est provoqué par une machine à chocs telle que décrite dans ladite norme.

### Systèmes d'isolation acoustique

Trois systèmes d'isolation acoustique sont testés.

Système de référence - Le premier système est un système acoustique de référence correspondant à un textile composé de fibres polyesters et d'une épaisseur d'environ 8 mm. Ce système n'est pas étanche à l'eau et ne comprend pas de cavités. Ce système est commercialisé sous la dénomination Bostik Kit Acoustique, avec une sous-couche acoustique Duflot ATH 5231.

Système (comparaison) - Le second système est un système acoustique comparatif commercialisé sous la dénomination commerciale PCI Pecilastic E par BASF. Ce système correspond aux systèmes décrits dans la demande WO 2010/105857 A1. Les cavités sont remplies à l'aide de sable naturel.

Système (invention) - Le troisième système est un système selon l'invention comprenant une première couche externe, une couche intermédiaire préformée et une seconde couche externe, assemblées par thermosoudage. La première couche externe est une couche non-tissée d'une épaisseur de 0,2 mm et comprenant des fibres de polyester. La couche intermédiaire préformée est obtenue à partir d'une couche ayant une épaisseur de 0,4 mm et comprenant du polyéthylène de basse densité. La couche intermédiaire comprend des cavités de 8 mm de diamètre et de 4 mm de hauteur, lesquelles représente environ 50 % de la surface de la couche. Ces cavités sont remplies d'un mélange comprenant 95 % de billes de caoutchouc recyclés (référence 0407 de Kias Recycling - Autriche) et 5 % d'éthylène-vinyle-acétate (agent liant). Le grammage de la composition est de 600 g/m². La seconde sous-couche externe est une couche non-tissée d'une épaisseur de 0,5 mm et comprenant des fibres de polyester. Ce troisième système correspond au système selon les figures 1 et 2 (photographies). La figure 1 est une photographie de la surface de la première couche externe (la couche supérieure). Les cavités et leur contenu sont visibles par transparence (cercles noirs). La figure 2 est une photographie de la tranche du système stratifié étanche, dont les éléments noirs correspondent aux cavités et leur mélange.

### Support

Le support de pose est une dalle en béton carrée de type « plancher lourd » de 50 cm de côté et 5 cm d'épaisseur conforme à la norme NF EN 1323 de juin 2008.

### Revêtement de sol

Le revêtement de sol est formé de dalles de carrelage carrées en grès cérame pleinement vitrifié de 30 cm de côté et de 8 mm d'épaisseur jointes à l'aide d'un mortier de jointement blanc en poudre du type J 175 flex commercialisé par Bostik.

### Pose du système d'isolation acoustique sur le support

Les systèmes d'isolation acoustique testés sont fixés sur le support à l'aide d'un adhésif du type PSA commercialisé sous la dénomination Colle Acoustique par Bostik ou alternativement d'un adhésif à base de MS polymère commercialisé sous la dénomination MSP 200 par Bostik.

Composition adhésive PSA (sans billes de verre expansées) - La composition adhésive PSA comprend 50 % de Vinnapas EAF 68, 30 % de Lipaton AE4522, 19,85 % d'eau, 0,1 % d'un épaississant acrylique et 0,05 % d'un conservateur, en poids total de la composition adhésive .

Composition adhésive PSA (avec billes de verre expansées) - La composition adhésive PSA comprend 42,5 % de Vinnapas EAF 68, 25,5 % de Lipaton AE4522, 16,87 % d'eau, 15% de billes de verre expansées « Poraver », 0,08 % d'un épaississant acrylique et 0,05 % d'un conservateur, en poids total de la composition adhésive.

Composition adhésive MS (sans billes de verre expansées) - La composition adhésive à base de MS polymère comprend 20 % de plastifiant, 30 % de « MS polymer SAX 303H » commercialisé par Kaneka, 47,4 % de carbonate de calcium Mickart 1T, 1 % de DAMO, 1 % de VTMO et 0,6 % d'un catalyseur à l'étain Neostan S-1 de chez Kaneka, en poids total de la composition adhésive.

Composition adhésive MS (avec billes de verre expansées) - La composition adhésive à base de MS polymère comprend 20 % de plastifiant, 30 % de « MS polymer SAX 303H » commercialisé par Kaneka, 32,4 % de carbonate de calcium Mickart 1T, 15% de billes de verre expansées « Poraver 0.5-1 mm», 1 % de DAMO, 1 % de VTMO et 0,6 % d'un catalyseur à l'étain Neostan S-1 de chez Kaneka, en poids total de la composition adhésive. Deux types différents de billes de verre expansées sont ajoutées, à savoir les billes de verre expansées ayant une granulométrie médiane en poids de 0,5 à 1 mm et les billes de verre expansées ayant une granulométrie médiane en poids de 1 à 2 mm.

L'adhésif est appliqué en cordons sur le support à l'aide d'une spatule de type B-12 à raison de 0.7 kg/m².

### Comparaison de la performance acoustique des trois systèmes

Chacun des trois systèmes à été posé sur le support à l'aide de la composition adhésive PSA. Les résultats suivants ont été obtenus :

**[Tableaux 1]**

| Système | Réduction acoustique |
|---|---|
| Système de référence | -19 dB |
| Système (comparaison) | -6 dB |
| Système (invention) | -18 dB |

Le test de réduction des bruits d'impact démontre que le système d'isolation acoustique selon l'invention présente une performance acoustique proche du système de référence et significativement supérieure à celle d'un système stratifié étanche du type de ceux divulgués dans la demande WO 2010/105857 A1. Cette performance améliorée sera associée notamment à l'utilisation d'un matériau de remplissage des cavités particulier, c'est-à-dire un matériau résilient ayant une dureté Shore A de 50 à 90, en particulier des billes de caoutchouc.

### Comparaison de la performance acoustique des compositions adhésives utilisés

Les différentes compositions adhésives, avec ou sans billes de verre expansées, ont été testées avec le système de l'invention. Les résultats suivants ont été obtenus :

**[Tableaux 2]**

| Composition adhésive | Réduction acoustique |
|---|---|
| Composition adhésive PSA sans billes de verre expansées | -18 dB |
| Composition adhésive MS avec billes de verre expansées (d50 de 0,5 à 1 mm) | -21 dB |
| Composition adhésive MS avec billes de verre expansées (d50 de 1 à 2 mm) | -19 dB |
| Composition adhésive MS sans billes de verre expansées | -18 dB |
| Composition adhésive PSA avec billes de verre expansées (d50 de 0,5 à 1 mm) | -20 dB |
| Composition adhésive PSA avec billes de verre expansées (d50 de 1 à 2 mm) | -19 dB |

Le test de réduction des bruits d'impact démontre que la performance acoustique du système selon l'invention est améliorée davantage lorsqu'il est posé sur le support à l'aide d'un adhésif comprenant des charges ayant une densité inférieure à 1 g/cm³, notamment des billes de verre expansées ayant une granulométrie médiane en poids (d50) de 0,5 mm à 2 mm.

## Revendications

1. Système stratifié étanche d'isolation acoustique pour revêtement de sol comprenant une première couche externe, une seconde couche externe, et une couche intermédiaire étanche interposée entre les deux couches externes ; ladite couche intermédiaire étant une couche plastique préformée présentant une série de cavités sur l'une de ses deux surfaces; lesdites cavités comprenant un matériau de remplissage résilient **caractérisé en ce que** ce matériau a une dureté Shore A de 50 à 90.

2. Système stratifié étanche d'isolation acoustique selon la revendication 1, selon lequel le matériau résilient est choisi parmi le groupe consistant en le caoutchouc, le liège, et leurs mélanges.

3. Système stratifié étanche d'isolation acoustique selon la revendication 2, selon lequel le matériau résilient est sous forme de billes de caoutchouc ayant une granulométrie médiane en poids (d50) de 0,1 à 2 mm.

4. Système stratifié étanche d'isolation acoustique selon l'une quelconque des revendications précédentes, selon lequel les cavités comprennent en outre un matériau liant.

5. Système stratifié étanche d'isolation acoustique selon l'une quelconque des revendications précédentes, comprenant en outre une couche adhésive obtenue par application d'une composition adhésive sur l'une des couches externes et/ou sur le support.

6. Système stratifié étanche d'isolation acoustique selon la revendication 5, selon lequel la composition adhésive comprend des charges ayant une densité inférieure à 1,2 g/cm³.

7. Système stratifié étanche d'isolation acoustique selon la revendication 6, selon lequel les charges ayant une densité inférieure à 1,2 g/cm³ sont des billes de verre expansées.

8. Système stratifié étanche d'isolation acoustique selon l'une quelconque des revendications précédentes, selon lequel la couche intermédiaire étanche est obtenue à partir d'une couche plane mise en forme par un procédé de formage ; préférentiellement par un procédé de thermoformage.

9. Système stratifié étanche d'isolation acoustique selon l'une quelconque des revendications précédentes, selon lequel la couche intermédiaire étanche comprend un matériau plastique choisi parmi le groupe consistant en les polyoléfines, le polyuréthane, le polychlorure de vinyle, le copolymère éthylène/acétate de vinyle, le terpolymère éthylène-propylène-diène ou leurs mélanges ; préférentiellement parmi le groupe consistant en le polyéthylène, le polypropylène, ou leurs mélanges.

10. Système stratifié étanche d'isolation acoustique selon l'une quelconque des revendications précédentes, selon lequel la couche intermédiaire étanche a une épaisseur de 1 mm à 9 mm ; préférentiellement de 2 mm à 7 mm ; très préférentiellement de 3 mm à 6 mm.

11. Système stratifié étanche d'isolation acoustique selon l'une quelconque des revendications précédentes, selon lequel les couches externes ont chacune une épaisseur de 5 µm à 5 mm ; préférentiellement de 10 µm à 3 mm ; très préférentiellement de 50 µm à 2 mm.

12. Système stratifié étanche d'isolation acoustique selon l'une quelconque des revendications précédentes, selon lequel les couches externes sont solidaires de la couche intermédiaire étanche, préférentiellement les couches externes sont thermosoudées sur la couche intermédiaire étanche.

13. Kit d'isolation acoustique comprenant:
un système stratifié étanche selon d'une quelconque des revendications 1 à 12 ; et une composition adhésive.

14. Procédé de pose d'un système stratifié étanche d'isolation acoustique, comprenant les étapes suivantes :
la fourniture d'un système stratifié étanche selon l'une quelconque des revendications 1 à 12 ;
la détermination de l'orientation du système stratifié étanche ; l'application d'une composition adhésive sur la couche externe inférieure à positionner en vis-à-vis du support ou directement sur le support ;
la pose du système stratifié étanche sur le support et l'adhésion de la couche externe inférieure au support ;
l'application d'un mortier-colle sur la couche externe supérieure ; et
la pose du revêtement de sol et l'adhésion à la couche externe supérieure.

## Patentansprüche

1. Dichtes schalldämmendes Laminatsystem zur Bodenverkleidung, umfassend eine erste äußere Schicht, eine zweite äußere Schicht und eine dichte Zwischenschicht, die zwischen die zwei äußeren Schichten eingefügt ist;
wobei die Zwischenschicht eine vorgeformte Kunststoffschicht ist, die auf einer ihrer zwei Oberflächen eine Reihe von Hohlräumen aufweist;
die Hohlräume umfassend ein elastisches Füllmaterial, **dadurch gekennzeichnet, dass** das Material eine Härte Shore-A von 50 bis 90 aufweist.

2. Dichtes, schalldämmendes Laminatsystem nach Anspruch 1, wobei das elastische Material ausgewählt ist aus der Gruppe, bestehend aus Gummi, Kork und Gemischen davon.

3. Dichtes, schalldämmendes Laminatsystem nach Anspruch 2, wobei das elastische Material in Form von Gummikügelchen ist, die eine mittlere Partikelgröße nach Gewicht (d50) von 0,1 bis 2 mm aufweist.

4. Dichtes, schalldämmendes Laminatsystem nach einem der vorherigen Ansprüche, wobei die Hohlräume ferner ein Bindemittelmaterial umfassen.

5. Dichtes, schalldämmendes Laminatsystem nach einem der vorherigen Ansprüche, ferner umfassend eine Klebeschicht, die durch Auftragen einer Klebstoffzusammensetzung auf eine der äußeren Schichten und/oder auf den Untergrund erlangt wird.

6. Dichtes, schalldämmendes Laminatsystem nach Anspruch 5, wobei die Klebstoffzusammensetzung Füllstoffe umfasst, die eine Dichte von weniger als 1,2 g/cm³ aufweisen.

7. Dichtes, schalldämmendes Laminatsystem nach Anspruch 6, wobei die Füllstoffe, die eine Dichte von weniger als 1,2 g/cm³ aufweisen, expandierte Glaskugeln sind.

8. Dichtes, schalldämmendes Laminatsystem nach einem der vorherigen Ansprüche, wobei die dichte Zwischenschicht anhand einer flachen Schicht erlangt wird, die durch ein Formverfahren, vorzugsweise durch ein Thermoformverfahren, geformt wird.

9. Dichtes, schalldämmendes Laminatsystem nach einem der vorherigen Ansprüche, wobei die dichte Zwischenschicht ein Kunststoffmaterial umfasst, das ausgewählt ist aus der Gruppe, bestehend aus Polyolefinen, Polyurethan, Polyvinylchlorid, Ethylen/Vinylacetat-Copolymer, Ethylen-Propylen-Dien-Terpolymer oder Gemischen davon; vorzugsweise aus der Gruppe, bestehend aus Polyethylen, Polypropylen oder Gemischen davon.

10. Dichtes, schalldämmendes Laminatsystem nach einem der vorherigen Ansprüche, wobei die dichte Zwischenschicht eine Stärke von 1 mm bis 9 mm, vorzugsweise von 2 mm bis 7 mm und sehr bevorzugt von 3 mm bis 6 mm aufweist.

11. Dichtes, schalldämmendes Laminatsystem nach einem der vorherigen Ansprüche, wobei die äußeren Schichten jeweils eine Stärke von 5 µm bis 5 mm, vorzugsweise von 10 µm bis 3 mm und besonders bevorzugt von 50 µm bis 2 mm aufweisen.

12. Dichtes, schalldämmendes Laminatsystem nach einem der vorherigen Ansprüche, wobei die äußeren Schichten fest mit der dichten Zwischenschicht verbunden sind, vorzugsweise die äußeren Schichten mit der dichten Zwischenschicht wärmeversiegelt sind.

13. Schalldämmungskit, umfassend:
ein dichtes Laminatsystem nach einem der Ansprüche 1 bis 12; und
eine Klebstoffzusammensetzung.

14. Verfahren zum Verlegen eines dichten, schalldämmenden Laminatsystems, umfassend die folgenden Schritte:
Bereitstellen eines dichten Laminatsystems nach einem der Ansprüche 1 bis 12;
Bestimmen der Ausrichtung des dichten Laminatsystems;
Auftragen einer Klebstoffzusammensetzung auf die untere äußere Schicht, die gegenüber dem Untergrund oder direkt auf dem Untergrund positioniert werden soll;
Verlegen des dichten, schalldämmenden Laminatsystems auf den Untergrund und Verkleben der unteren äußeren Schicht an dem Untergrund;
Auftragen eines Klebemörtel auf die obere äußere Schicht; und
Verlegen des Bodenbelags und das Verkleben an der obersten äußeren Schicht.

## Claims

1. A stratified sealing soundproofing system for floorings comprising a first outer layer, a second outer layer, and an intermediate sealing layer inserted between the two outer layers; said intermediate layer being a preformed plastic layer having a series of cavities on one of the two surfaces thereof; said cavities comprising a resilient filler material, **characterized in that** this material has Shore A hardness of 50 to 90.

2. The stratified sealing soundproofing system according to claim 1, wherein the resilient material is chosen from the group formed by rubber, cork and mixtures thereof.

3. The stratified sealing soundproofing system according to claim 2, wherein the resilient material is in the form of rubber beads having a mass median particle size (D50) of 0.1 to 2 mm.

4. The stratified sealing soundproofing system according to any of the preceding claims, wherein the cavities further comprise a binder material.

5. The stratified sealing soundproofing system according to any of the preceding claims, further comprising an adhesive layer obtained by applying an adhesive composition onto one of the outer layers and/or onto the substrate.

6. The stratified sealing soundproofing system according to claim 5, wherein the adhesive composition comprises fillers having a density of less than 1.2 g/cm³.

7. The stratified sealing soundproofing system according to claim 6, wherein the fillers having a density of less than 1.2 g/cm³ are expanded glass beads.

8. The stratified sealing soundproofing system according to any of the preceding claims, wherein the intermediate sealing layer is obtained from a planar layer formed by a forming method; preferably by a thermoforming method.

9. The stratified sealing soundproofing system according to any of the preceding claims, wherein the intermediate sealing layer comprises a plastic material chosen from the group formed by polyolefins, polyurethane, polyvinyl chloride, ethylene/vinyl acetate copolymer, ethylene-propylene-diene terpolymer, or mixtures thereof; preferably from the group formed by polyethylene, polypropylene or mixtures thereof.

10. The stratified sealing soundproofing system according to any of the preceding claims, wherein the intermediate sealing layer has a thickness of 1 mm to 9 mm; preferably from 2 mm to 7 mm; more preferably from 3 mm to 6 mm.

11. The stratified sealing soundproofing system according to any of the preceding claims, wherein the outer layers each have a thickness of 5 µm to 5 mm; preferably from 10 µm to 3 mm; more preferably from 50 µm to 2 mm.

12. The stratified sealing soundproofing system according to any of the preceding claims, wherein the outer layers are joined to the intermediate sealing layer, preferably the outer layers are thermobonded onto the intermediate sealing layer.

13. A soundproofing kit comprising: a stratified sealing system according to any of claims 1 to 12; and an adhesive composition.

14. A method of laying a stratified sealing soundproofing system, comprising the following steps: providing a stratified sealing system according to any of claims 1 to 12; determining the orientation of the stratified sealing system; applying an adhesive composition to the lower outer layer to be positioned facing the substrate, or directly on the substrate; laying the stratified sealing system on the substrate with adhesion of the lower outer layer to the substrate; applying an adhesive mortar to the upper outer layer; and laying the flooring with adhesion to the upper outer layer.
